# EUROPEAN PATENT APPLICATION

(11) **EP 3 711 972 A1**
(43) Date of publication of application: **23.09.2020**
(21) Application number: 18879177.6
(22) Date of filing: 21.02.2018
(51) Int. Cl.: B60B 33/00, A47L 9/00, A47L 9/28, G05D 1/02

(54) **WHEEL SUPPORT STRUCTURE FOR SELF-PROPELLED ELECTRONIC DEVICE**

(30) Priority: 16.11.2017 JP 2017221097; 27.12.2017 JP 2017251305
(71) Applicant: Sharp Kabushiki Kaisha, Sakai City, Osaka 590-8522 (JP)
(72) Inventor: YATO, Yuki, Sakai City, Osaka 590-8522 (JP)
(74) Representative: Treeby, Philip David William
(86) International application number: PCT/JP2018/006221
(87) International publication number: WO 2019/097736

(57) **Abstract**

Provided is a wheel support structure for self-propelled electronic device which takes safety into account, by not jumping out vigorously with strong force when a drive wheel protrudes to the exterior. The wheel support structure for self-propelled electronic device is characterized by comprising: a drive wheel which supports and drives a housing on a floor surface; a swinging support unit which rotatably supports the drive wheel and mounts the drive wheel to the bottom part of the housing so as to be able to swing in a vertical direction about the swinging axle; and a biasing mechanism which includes a biasing member which biases the drive wheel so as to swing downwards, wherein the biasing mechanism biases the swinging support unit downwards by means of the biasing member in a state in which the housing is placed on the floor, and the biasing towards the swinging support unit by the biasing member is released in a state in which the drive wheel is not in contact with the floor surface.

## Description

### [Technical Field]

The present invention relates to a wheel support structure for a self-propelled electronic device.

### [Background Art]

As a traditional self-propelled electronic device, for example, PTL 1 discloses a self-propelled transport vehicle comprising the following members: front and rear body framings; a plurality of casters supporting the body framings; right and left frames provided between the front body framing and the rear body framing; and a pair of drive wheels supporting the right and left frames. Each of the frames of this self-propelled transport vehicle is swingably joined with one of the front and rear body framings through an oscillation shaft extending in a right-left direction and also is joined with the other body framing through a junction shaft so as to be swingable up and down. Each of the body framings and each of the frames have a compression spring provided therebetween that allows each of the junction shafts to penetrate through the compression spring so that the drive wheels are pushed downward by the compression springs through the frames. In case a floor surface is uneven where this self-propelled transport vehicle travels on, the drive wheels are configured to go up and down with use of the oscillation shafts as fulcrum shafts in response to the unevenness of the floor surface and to rotate along the uneven floor surface.

Furthermore, PTL 2 discloses a self-propelled electronic device including wheel support structures that cause drive wheels to protrude downward from a bottom part of a housing using tension springs. The self-propelled electronic device has a configuration in which the drive wheels protrude downward through right and left holes in the bottom part of the housing.

### [Citation List]

### [Patent Literature]

[PTL 1] Japanese Unexamined Patent Application Publication No. H09-286337
[PTL 2] Japanese Unexamined Patent Application Publication No. 2016-143231

### [Summary of Invention]

### [Technical Problem]

In a self-propelled electronic device including wheel support structures that use springs to cause drive wheels to protrude outward through holes in the bottom part of the housing as disclosed in PTL 2, the drive wheels are biased by the springs so as to be always protruding outward. Furthermore, this wheel support structures maintain strong biasing force of the springs to enable the drive wheels to protrude outward with force strong enough to climb a floor level difference. That is, the biasing force of the springs toward the drive wheels is maintained so strong as to give a protrusion length greater than a protrusion length necessary for the drive wheels to climb the floor level difference (i.e., an elevation step, an elevation change, or a floor step).

As such, if a child toys around with the self-propelled electronic device by turning it over and pushing or spinning any of the drive wheels with a finger, for example, the drive wheel may pop out through the corresponding hole with a great protrusion amount (strong force). In such a case, the child may get injured due to the drive wheel scratching the finger or the hole and the drive wheel catching the finger therebetween.

The present invention was made in view of the above-described problem, and it is an object of the present invention to provide a wheel support structure for a self-propelled electronic device that prevents, in consideration of safety, a drive wheel from popping out with strong force when the drive wheel is caused to protrude outward.

### [Solution to Problem]

The present invention therefore provides a wheel support structure for a self-propelled electronic device, comprising: a drive wheel supporting a housing to cause the housing to run on a floor surface; a swinging support unit rotatably supporting the drive wheel and pivoting the drive wheel to a bottom part of the housing in such a way that the drive wheel is swingable upward and downward about a swinging axle; and a biasing mechanism including a biasing member configured to give a downward bias to the swinging support unit to cause the drive wheel to swing downward, wherein
the biasing mechanism gives the dowanward bias to the swinging support unit using the biasing member while the housing is on the floor, and release the dowanward bias while the drive wheel is off the floor surface.

### [Advantageous Effects of Invention]

According to the wheel support structure for the self-propelled electronic device of the present invention, the bias from the biasing member toward the swinging support unit is released while the drive wheel is off the floor surface as a result of the housing being lifted or turned over. That is, the drive wheel becomes free from the load from the biasing member once the drive wheel protrudes from the bottom part of the housing to a certain degree. This reduces the risk of injury to a child, for example, due to the drive wheel popping out through a hole in the housing with a great protrusion amount (strong force) and scratching the child's finger or the hole and the drive wheel catching the child's finger therebetween, when the child is toying around with the self-propelled electronic device by turning it over and pushing or spinning the drive wheel with the finger.

### [Brief Description of Drawings]

[Figure 1]

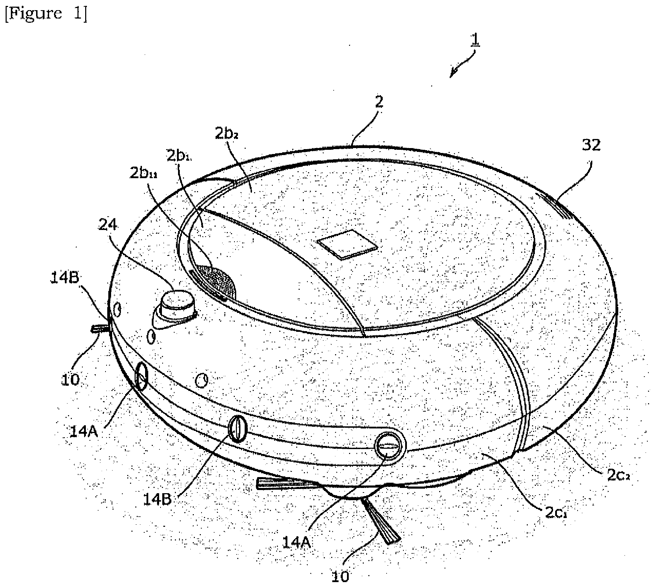

   Figure 1 is a perspective view of external appearance of a self-propelled electronic device including a wheel support structure according to the present invention.
[Figure 2]

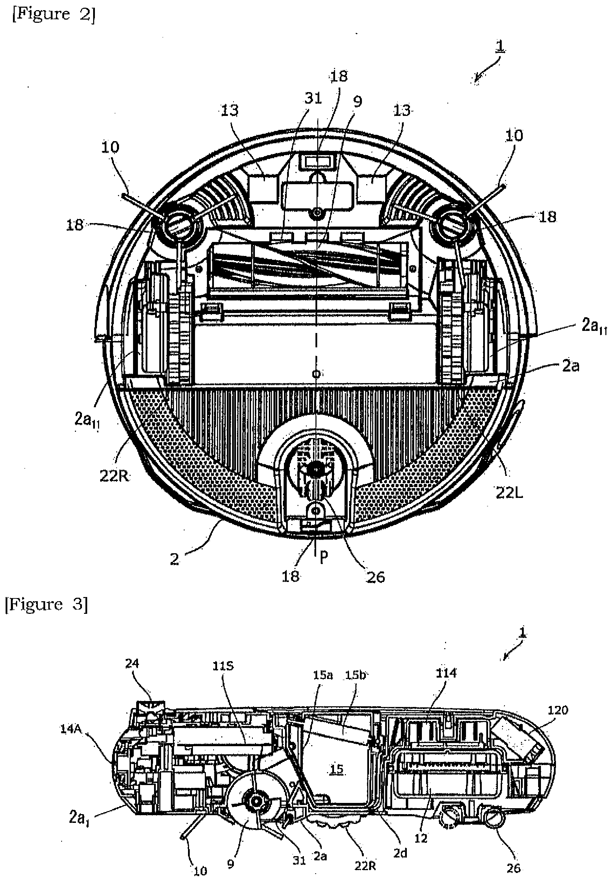

   Figure 2 is a bottom view of the self-propelled electronic device illustrated in Figure 1.
[Figure 3]
   Figure 3 is a vertical cross-sectional view of the self-propelled electronic device illustrated in Figure 1 taken along a front-back direction.
[Figure 4]

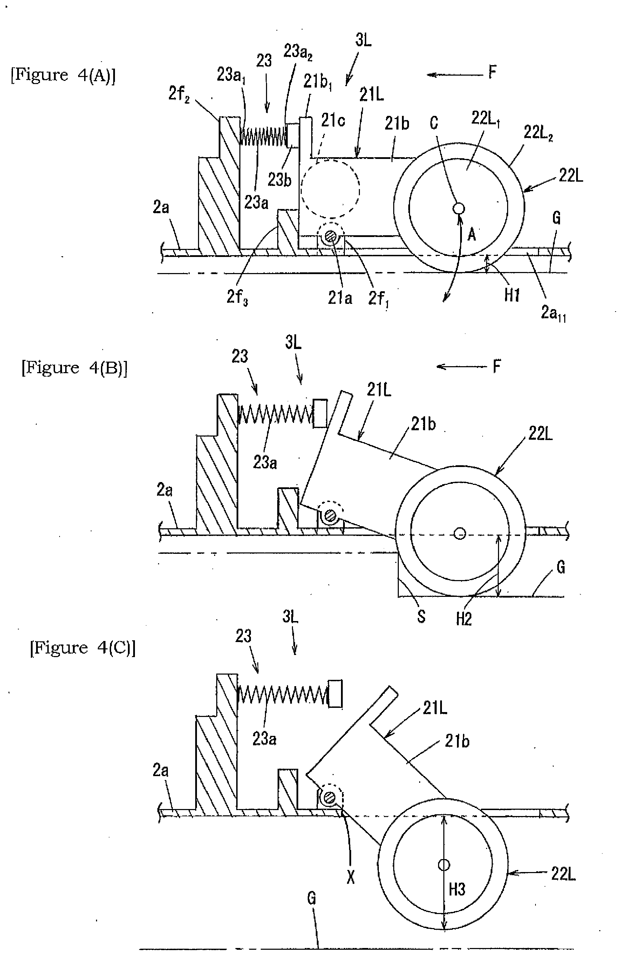

   Figures 4(A) to 4(C) are each an explanatory diagram of a wheel support structure according to a first embodiment, among which Figure 4(A) illustrates a state in which a drive wheel is running on a floor surface, Figure 4(B) illustrates a state in which the drive wheel is climbing a floor level difference, and Figure 4(C) illustrates a state in which the drive wheel is off the floor surface.
[Figure 5]

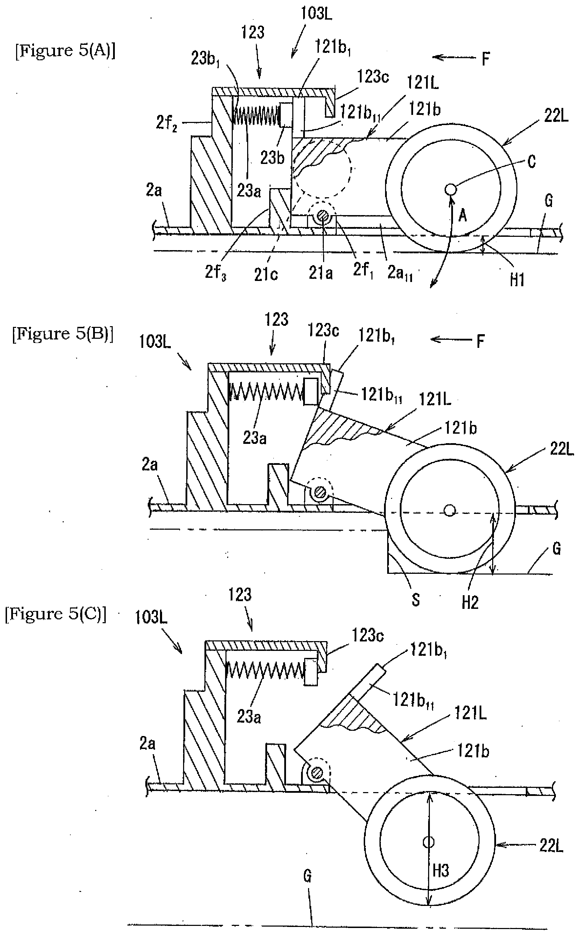

   Figures 5(A) to 5(C) are each an explanatory diagram of a wheel support structure according to a second embodiment, among which Figure 5(A) illustrates a state in which a drive wheel is running on a floor surface, Figure 5(B) illustrates a state in which the drive wheel is climbing a floor level difference, and Figure 5(C) illustrates a state in which the drive wheel is off the floor surface.
[Figure 6]

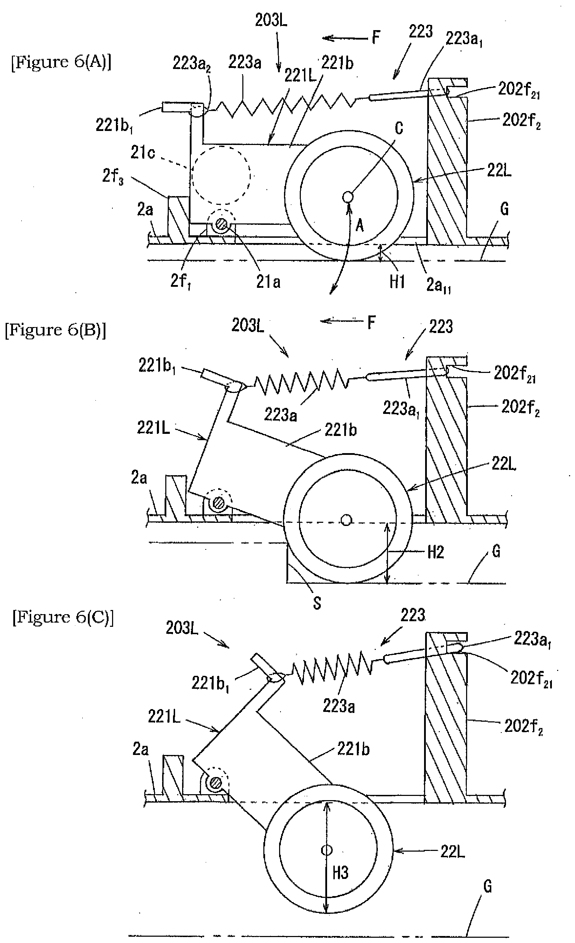

   Figures 6(A) to 6(C) are each an explanatory diagram of a wheel support structure according to a third embodiment, among which Figure 6(A) illustrates a state in which a drive wheel is running on a floor surface, Figure 6(B) illustrates a state in which the drive wheel is climbing a floor level difference, and Figure 6(C) illustrates a state in which the drive wheel is off the floor surface.
[Figure 7]

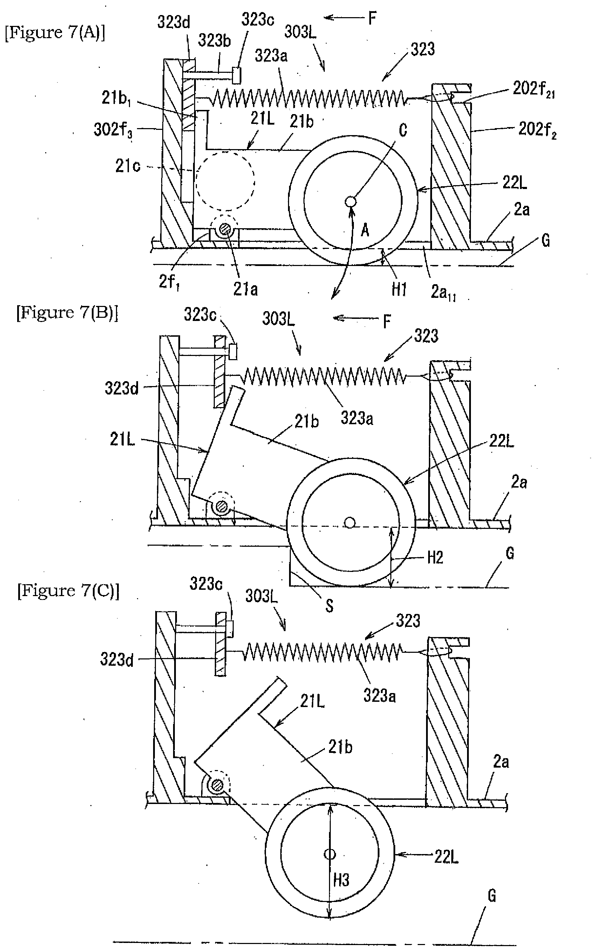

   Figures 7(A) to 7(C) are each an explanatory diagram of a wheel support structure according to a fourth embodiment, among which Figure 7(A) illustrates a state in which a drive wheel is running on a floor surface, Figure 7(B) illustrates a state in which the drive wheel is climbing a floor level difference, and Figure 7(C) illustrates a state in which the drive wheel is off the floor surface.
[Figure 8]

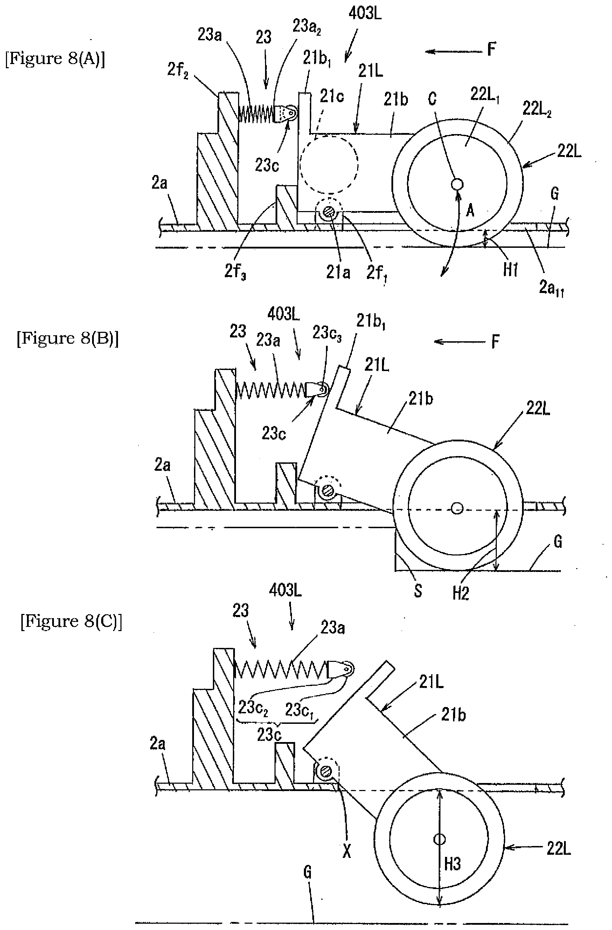

   Figures 8(A) to 8(C) are each an explanatory diagram of a wheel support structure according to a fifth embodiment, among which Figure 8(A) illustrates a state in which a drive wheel is running on a floor surface, Figure 8(B) illustrates a state in which the drive wheel is climbing a floor level difference, and Figure 8(C) illustrates a state in which the drive wheel is off the floor surface.
[Figure 9]

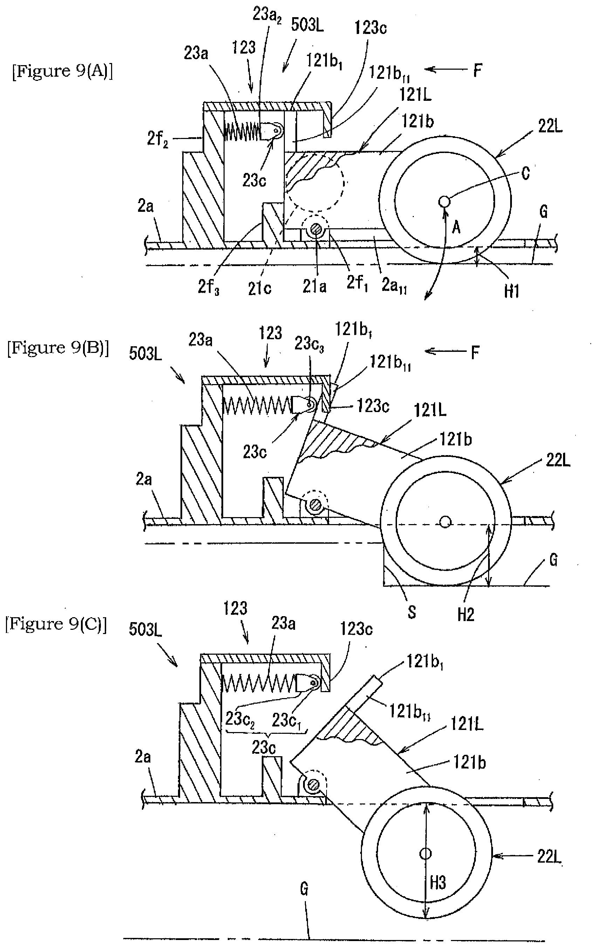

   Figures 9(A) to 9(C) are each an explanatory diagram of a wheel support structure according to a sixth embodiment, among which Figure 9(A) illustrates a state in which a drive wheel is running on a floor surface, Figure 9(B) illustrates a state in which the drive wheel is climbing a floor level difference, and Figure 9(C) illustrates a state in which the drive wheel is off the floor surface.
[Figure 10]

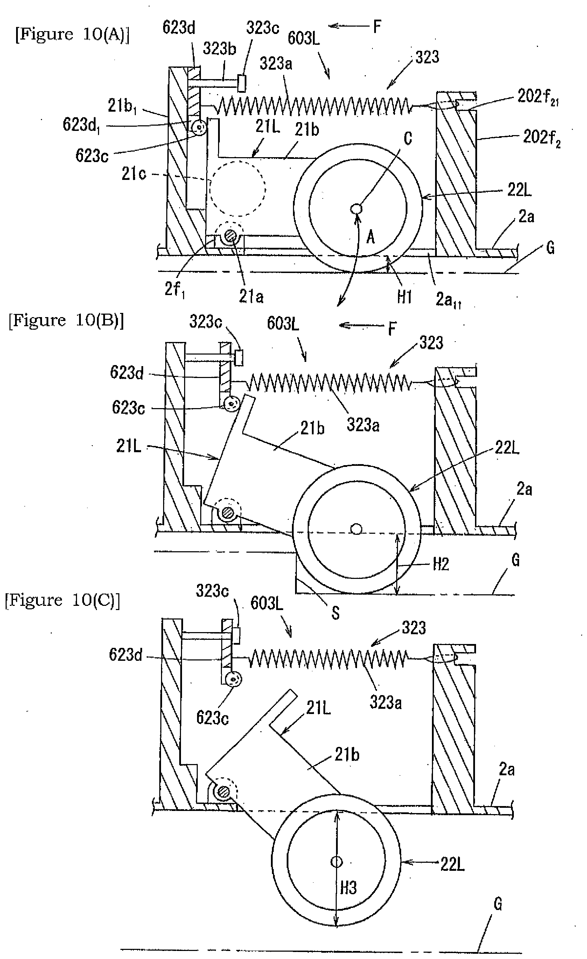

   Figures 10(A) to 10(C) are each an explanatory diagram of a wheel support structure according to a seventh embodiment, among which Figure 10(A) illustrates a state in which a drive wheel is running on a floor surface, Figure 10(B) illustrates a state in which the drive wheel is climbing a floor level difference, and Figure 10(C) illustrates a state in which the drive wheel is off the floor surface.
[Figure 11]

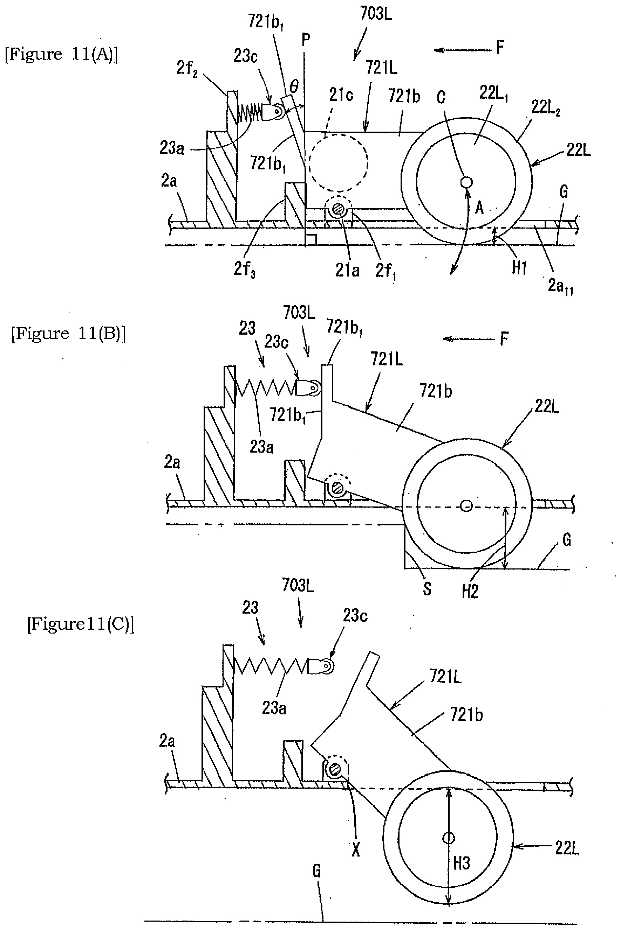

   Figures 11(A) to 11(C) are each an explanatory diagram of a wheel support structure according to an eighth embodiment, among which Figure 11(A) illustrates a state in which a drive wheel is running on a floor surface, Figure 11(B) illustrates a state in which the drive wheel is climbing a floor level difference, and Figure 11(C) illustrates a state in which the drive wheel is off the floor surface.

### [Description of Embodiments]

The following describes embodiments with reference to the drawings taking, as an example, a case where the self-propelled electronic device according to the present invention is a self-propelled vacuum cleaner. However, the self-propelled electronic device according to the present invention is not limited to the self-propelled vacuum cleaner.

### (First Embodiment)

Figure 1 is a perspective view of external appearance of a self-propelled electronic device including a wheel support structure according to the present invention. Figure 2 is a bottom view of the self-propelled electronic device illustrated in Figure 1. Figure 3 is a vertical cross-sectional view of the self-propelled electronic device illustrated in Figure 1 taken along a front-back direction. Figures 4(A) to 4(C) are each an explanatory diagram of the wheel support structure according to a first embodiment, among which Figure 4(A) illustrates a state in which a drive wheel is running on a floor surface, Figure 4(B) illustrates a state in which the drive wheel is climbing a floor level difference, and Figure 4(C) illustrates a state in which the drive wheel is off the floor surface. It should be noted that the front-back direction in the following description means a direction collinear with a straight line along which the self-propelled vacuum cleaner moves straight ahead on a floor surface G, and a left-right direction means a direction collinear with a horizontal straight line orthogonal to the front-back direction.

### <Configuration of Self-propelled Vacuum Cleaner>

As illustrated in Figures 1 to 3, a self-propelled vacuum cleaner 1 includes wheel support structures 3L according to the first embodiment and a housing 2 having a disc-like shape. It should be noted that the housing 2 is not limited to a circular, disc-like shape as in the case of the first embodiment but may for example have an elliptical shape or a polygonal shape in a plan view.

The housing 2 includes a circular top plate. The top plate includes a top plate front part 2b₁ being a front of the top plate, and a lid part 2b₂ being a middle and a rear of the top plate. The lid part 2b₂ opens upward by pivoting about a hinge, not shown, disposed on a side thereof at a boundary between the lid part 2b₂ and the top plate front part 2b₁. A front end of the top plate front part 2b₁ has a plurality of air holes 2b₁₁ for releasing heat from a circuit board (not shown) disposed inside.

The housing 2 also includes an annular side plate and a bottom plate 2a. The housing 2 further includes an inner structural wall 2d as illustrated in Figure 3. The bottom plate 2a has a front end 2a₁ rising frontward, and thus providing a curved surface or an inclined surface (see Figure 3).

The side plate includes an arc-shaped side plate front half 2c₁ and an arc-shaped side plate rear half 2c₂. The side plate front half 2c₁ is movably engaged with the inner structural wall 2d with an elastic material, not shown, therebetween in order to function as a bumper. An obstacle contact sensor (not shown) that detects collision of the side plate front half 2c₁ is provided inside the side plate front half 2c₁. Furthermore, ultrasonic receivers 14A are disposed in three (3) positions on the side plate front half 2c₁-a front position, a left front position, and a right front position, and ultrasonic transmitters 14B are disposed in two (2) positions between the three positions of the ultrasonic receivers 14A.

Furthermore, a guide signal receiver 24 and a charging connector 13 are disposed in respective positions on a front surface of the housing 2 that are visible from the exterior.

The housing 2 has a suction port 31 in the bottom plate 2a forming a bottom part and an exhaust port 32 extending obliquely upward in a rear part. A dust collection section 15 and an electric air blower (not shown) are disposed inside the housing 2. The dust collection section 15 collects dust from a room being vacuumed. The dust collection section 15 includes a dust container 15a and a dust collecting filter 15b. The dust container 15a has an inlet port leading to an inlet channel in communication with the suction port 31 and an exhaust port leading to a duct 114 in communication with the electric air blower (not shown).

A front half of a bottom face of the self-propelled vacuum cleaner 1 is provided with a rotary brush 9 disposed behind the suction port 31, a side brush 10 disposed diagonally in front of the suction port 31 to the left, a side brush 10 disposed diagonally in front of the suction port 31 to the right, and a drive wheel unit (see Figures 4(A) to 4(C)) including a drive wheel disposed diagonally behind the suction port 31 to the left (a left drive wheel 22L) and a drive wheel disposed diagonally behind the suction port 31 to the right (a right drive wheel 22R). It should be noted that lower portions of the respective drive wheels protrude outward through left and right holes 2a₁₁ in the bottom plate 2a of the housing 2.

The rotary brush 9 and the side brushes 10 are driven to rotate by a brush motor (not shown). A rear half of the bottom face is provided with a pivotable rear wheel 26 in a middle position in the left-right direction. The rear wheel 26 is rotatable. It should be noted that Figures 2 and 3 show the rear wheel 26 pivoted forward by 180° using a dashed-two dotted line.

The self-propelled vacuum cleaner 1 has floor surface detection sensors 18 disposed in four (4) positions in total on the bottom part of the housing 2, four (4) positions are at front and rear ends in the front-back direction, and at axial centers of the left and right brushes 10.

Furthermore, a circuit board 11S is disposed in a front half of the self-propelled vacuum cleaner 1, and a rechargeable battery 12 and an ion generator 120 are disposed in a rear half of the self-propelled vacuum cleaner 1.

The self-propelled vacuum cleaner 1 cleans a floor surface on which the self-propelled vacuum cleaner 1 has been placed (a surface for the self-propelled vacuum cleaner 1 to run on) by sucking air including dust from the floor surface and exhausting the air from which the dust has been removed while autonomously running on the floor surface. The self-propelled vacuum cleaner 1 runs while autonomously avoiding an obstacle detected by any of the ultrasonic receivers 14A serving as obstacle detectors. The self-propelled vacuum cleaner 1 also runs while autonomously avoiding a drop below the level of the floor surface by detecting such the drop using the floor surface detection sensors 18. The self-propelled vacuum cleaner 1 has a function of autonomously returning to a charging dock, not shown, once the self-propelled vacuum cleaner 1 finishes cleaning.

### <Wheel Support Structure>

As illustrated in Figures 2 to 4(C), the self-propelled vacuum cleaner 1 according to the first embodiment includes the left and right wheel support structures 3L, of which the right wheel support structure is not shown, supporting the left and right drive wheels 22L and 22R, respectively.

The following describes the left wheel support structure 3L. The left and right wheel support structures are symmetrical to each other with respect to a center line P (see Figure 2) extending in the front-back direction of the self-propelled vacuum cleaner 1. Description of the right wheel support structure is therefore omitted.

The wheel support structure 3L includes the drive wheel 22L, a swinging support unit 21L, and a biasing mechanism 23 including a biasing member 23a. The drive wheel 22L supports the housing 2 and causes the housing 2 to run on the floor surface. The swinging support unit 21L rotatably supports the drive wheel 22L and pivots (mounts) the drive wheel 22L to the bottom plate 2a of the housing 2 in such a way that the drive wheel 22L is swingable upward and dowanward (a direction indicated by arrow A) about a swinging axle 21a extending in the left-right direction. The biasing member 23a gives the downward bias to the swinging support unit 21L to cause the drive wheel 22L to swing downward.

The wheel support structure 3L also includes, as described below, a fixing section that is provided on the bottom plate 2a and fixes the swinging support unit 21L and the biasing mechanism 23 to the bottom plate 2a of the housing 2.

The fixing section provided on the bottom plate 2a includes a swinging axle mounting rib 2f₁ provided in the vicinity of a front end of the hole 2a₁₁ in the bottom plate 2a and a biasing member mounting rib 2f₂ provided in front of the swinging axle mounting rib 2f₁ on the bottom plate 2a. It should be noted that an abutment rib 2f₃ that comes in abutment with the swinging support unit 21L to restrict the swinging support unit 21L from swinging upward may be provided between the swinging axle mounting rib 2f₁ and the biasing member mounting rib 2f₂ on the bottom plate 2a.

The swinging support unit 21L includes a swinging arm 21b and the swinging axle 21a attached to a lower surface of one end of the swinging arm 21b. The swinging support unit 21L is attached to the bottom part 2a of the housing 2 in a swingable manner about the swinging axle 21a in an direction fro downside to upside (the direction indicated by arrow A).

The drive wheel 22L is rotatably attached to another end of the swinging arm 21b, and a projection 21b₁ projecting upward is provided on an upper surface of the one end of the swinging arm 21b. The biasing member 23a pushes the projection 21b₁. It should be noted that the projection 21b₁ is unnecessary as long as the swinging arm 21b has a total height enough to be pushed by the biasing member 23a.

The swinging support unit 21L may be further provided with a drive motor 21c and a rotational force transmitting mechanism (not shown) that transmits rotational force of an output shaft of the drive motor 21c to the drive wheel 22L. In this case, for example, the rotational force transmitting mechanism is provided within the swinging arm 21b having a case shape, and the drive motor 21c is fixed to a side face of the swinging arm 21b.

The rotational force transmitting mechanism for example has a configuration including an output gear, an input gear, and one or more transmission gears in meshing engagement with the output gear and the input gear. The output gear is fixed to the output shaft, which projects into the swinging arm 21b having a case shape, of the drive motor 21c. The input gear is fixed to a supporting shaft, which projects into the swinging arm 21b, of the drive wheel 22L. The transmission gears are rotatably provided within the swinging arm 21b. Alternatively, the rotational force transmitting mechanism has a configuration including a first grooved pulley, a second grooved pulley, and a timing belt wound around the first and second grooved pulleys. The first grooved pulley is fixed to the output shaft, which projects into the swinging arm 21b, of the drive motor 21c. The second grooved pulley is fixed to the supporting shaft, which projects into the swinging arm 21b, of the drive wheel 22L. It should be noted that the wheel support structure 3L may have a configuration in which the rotational force transmitting mechanism reduces the rotational speed of the output shaft of the drive motor 21c or a configuration in which the drive motor 21c is able to adjust the rotational speed.

The drive wheel 22L has a wheel 22L₁, the supporting shaft C fixed to a center hole of the wheel 22L₁, and a rubber tire 22L₂ fitted in an outer periphery of the wheel 22L₁. It should be noted that an outer periphery of the rubber tire 22L₂ has a tread pattern (see Figures 2 and 3), which is omitted in Figures 4(A) to 4(C).

The biasing mechanism 23 gives the downward bias to the swinging support unit 21L using the biasing member 23a while the housing 2 is on the floor surface G (see Figures 4(A) and 4(B)). The downward bias from the biasing member 23a toward the swinging support unit 21L is released while the drive wheel 22L is off the floor surface G (see Figure 4(C)).

More specifically, the biasing member 23a according to the first embodiment is a compression spring having a proximal end 23a₁ fixed to the biasing member mounting rib 2f₂, which is the fixing section provided within the housing 2, and a distal end 23a₂ enabled to abut the swinging support unit 21L. In this case, the distal end 23a₂ of the compression spring may be provided with an abutment member 23b that is to abut the projection 21b₁ of the swinging arm 21b of the swinging support unit 21L. Preferably, the abutment member 23b is made from a material (for example, rubber) that resists slipping against the projection 21b₁ of the swinging arm 21b. In addition, the projection 21b₁ may be microtextured for slip resistance in a surface thereof to be in contact with the abutment member 23b.

The following describes operation of the wheel support structure 3L with reference to Figures 1 to 4(C).

As illustrated in Figure 4(A), the drive wheel 22L is kept in a state reached after having swung upward relative to the bottom plate 2a of the housing 2 against the biasing force of the biasing member 23a, while the self-propelled vacuum cleaner 1 is moving straight ahead (moving forward) on the floor surface G in a direction indicated by arrow F. In this state, the one end of the swinging arm 21b is in abutment with the abutment rib 2f₃ to restrict the swinging arm 21b from swinging upward, keeping a protrusion length H1 of the drive wheel 22L protruding from the bottom plate 2a of the housing 2 to a minimum. Furthermore, in the state illustrated in Figure 4(A), the projection 21b₁ of the swinging arm 21b pushes the biasing member 23a with the abutment member 23b therebetween, compressing the biasing member 23a.

When the self-propelled vacuum cleaner 1 comes to a floor level difference that is higher than the level of the bottom plate 2a and that is high enough to touch the front end 2a₁ (see Figure 3) of the bottom plate 2a, the front end 2a₁ of the housing 2 abuts an edge of the floor level difference. The front end 2a₁, which is curved or inclined, of the housing 2 then slides over the edge of the floor level difference to climb the floor level difference as the self-propelled vacuum cleaner 1 further moves forward after having abutted the floor level difference. Thus, the housing 2 moves forward with the bottom plate 2a sliding on the edge of the floor level difference. While in sliding contact with the edge of the floor level difference, the bottom plate 2a of the housing 2 is slightly inclined with the front end 2a₁ leaving the floor level difference. As a result, a gap between the floor surface G and a portion of the bottom plate 2a in the vicinity of the drive wheel 22L increases as illustrated in Figure 4(B). It should be noted that the bottom plate 2a of the housing 2 and the floor surface G are parallel to each other in Figure 4(B) for convenience of illustration.

The biasing member 23 (compression spring), meanwhile, gives the downward bias to the swinging arm 21b of the swinging support unit 21L to cause the drive wheel 22L to greatly protrude downward relative to the bottom plate 2a. Thus, the drive wheel 22L climbs the floor level difference S while greatly protruding downward. The biasing member 23 has not yet reached a fully stretched state, still biasing the drive wheel 22L downward. Under this continued bias, the drive wheel 22L protruding from the bottom plate 2a of the housing 2 reaches an approximately maximum protrusion length H2.

Once the self-propelled vacuum cleaner 1 is lifted and the drive wheel 22L leaves the floor surface G as illustrated in Figure 4(C), for example, the swinging support unit 21L is no longer coupled to the biasing member 23a. Accordingly, the drive wheel 22L swings downward due to its own weight to reach a maximum protrusion length H3, and the biasing member 23a reaches the fully stretched state. At the same time, a lower surface of the swinging arm 21b abuts a front end of the hole 2a₁₁ in the bottom plate 2a of the housing 2 to restrict downward swing of the drive wheel 22L to the maximum protrusion length H3. The drive wheel 22L is stopped from swinging downward beyond the maximum protrusion length H3 by the swinging arm 21b and an edge X of the hole 2a₁₁ in the bottom plate 2a being in contact with each other (see Figure 4(C)). Alternatively or additionally, a member for stopping the drive wheel 22L may be attached to the bottom plate 2a.

That is, according to the wheel support structure 3L, it is possible to bias the swinging support unit 21L using the biasing member 23a to cause the drive wheel 22L to protrude downward to the extent that the drive wheel 22L can climb the floor level difference S, and it is possible to release the bias from the biasing member 23a toward the swinging support unit 21L when the drive wheel 22L is to protrude further outward.

When the self-propelled vacuum cleaner 1 is turned over, therefore, the drive wheel 22L protrudes outward until the drive wheel 22L reaches a protrusion length equal to the protrusion length H2 illustrated in Figure 4(B) plus a margin (until the biasing member 23a reaches the fully stretched state) but is prevented from easily popping out beyond the approximately maximum protrusion length H2 since the biasing force from the biasing member 23a is not applied when the drive wheel 22L is to protrude further outward. This reduces the risk of injury to a child, for example, due to the drive wheel popping out through the hole in the bottom part with a great protrusion amount (strong force) and scratching the child's finger or the hole and the drive wheel catching the child's finger therebetween, when the child is toying around with the self-propelled electronic device by turning it over and pushing or spinning the drive wheel with the finger.

### (Second Embodiment)

Figures 5(A) to 5(C) are each an explanatory diagram of a wheel support structure according to a second embodiment, among which Figure 5(A) illustrates a state in which a drive wheel is running on a floor surface, Figure 5(B) illustrates a state in which the drive wheel is climbing a floor level difference, and Figure 5(C) illustrates a state in which the drive wheel is off the floor surface. It should be noted that elements in Figures 5(A) to 5(C) that are the same as the elements in Figures 4(A) to 4(C) are labelled using the same reference signs.

A wheel support structure 103L according to the second embodiment is substantially the same as the wheel support structure 3L according to the first embodiment other than including a biasing mechanism 123 having a different configuration from the biasing mechanism 23 in the first embodiment. The following mainly describes differences between the second embodiment and the first embodiment.

The biasing mechanism 123 in the second embodiment includes a stopper 123c that restricts stretching of the biasing member 23a in addition to the biasing member 23a (compression spring) having the abutment member 23b at the distal end thereof and having a proximal end 23b₁ fixed to the biasing member mounting rib 2f₂.

The stopper 123c has a function of stopping the distal end (the abutment member 23b in this case) of the biasing member 23a from pushing the swinging support unit 21L once the drive wheel 22L protrudes downward from the bottom plate 2a of the housing 2 beyond a predetermined protrusion length.

It is sufficient that the stopper 123c be provided on the fixing section within the housing 2. In the second embodiment, a proximal end of the stopper 123c being an L-shaped projection is attached to an upper end of the biasing member mounting rib 2f₂. A distal end of the stopper 123c bends downward for abutment with the abutment member 23b.

Furthermore, in the second embodiment, a projection 121b₁ of a swinging arm 121b of a swinging support unit 121L has a vertical slit 121b₁₁, so that the distal end of the stopper 123c can pass through the slit 121b₁₁ of the projection 121b₁. It should be noted that the abutment member 23b of the biasing mechanism 123 can abut both left and right sides of the slit 121b₁₁ in the projection 121b₁ of the swinging arm 121b.

According to the wheel support structure 103L having such a configuration, as in the case of the first embodiment, the swinging arm 121b is biased by the biasing member 23a to swing downward while the self-propelled vacuum cleaner is moving straight ahead on the floor surface G as illustrated in Figure 5(A).

The swinging arm 121b biased by the biasing member 23a greatly swings downward when the self-propelled vacuum cleaner is climbing the floor level difference S as illustrated in Figure 5(B), but the projection 121b₁ of the swinging arm 121b does not abut the stopper 123c because of the slit 121b₁₁. It should be noted that the abutment member 23b of the biasing member 23a in this state is in proximity to the distal end of the stopper 123c.

Furthermore, once the self-propelled vacuum cleaner is lifted and the drive wheel 22L leaves the floor surface G as illustrated in Figure 5(C), the swinging support unit 121L is no longer coupled to the biasing member 23a. Accordingly, the drive wheel 22L is released from the bias from the biasing member 23a and swings downward due to its own weight to reach the maximum protrusion length H3.

However, the abutment member 23b of the biasing member 23a is not in the fully stretched state as abutting the distal end of the stopper 123c. That is, the biasing member 23a in this state has remaining biasing force, because the biasing member 23a has not fully stretched and the biasing force thereof is not zero.

That is, the wheel support structure 103L according to the second embodiment can transmit strong pushing force to the swinging support unit 121L using the biasing member 23a (compression spring). Specifically, the biasing force gradually increases from zero as the compression spring gradually compresses from the fully stretched state, and therefore the compression spring is enabled to maintain strong pushing force while biasing the swinging support unit 121L by being designed to abut the stopper 123c once the compression spring has stretched to a predetermined length (a predetermined biasing point). According to such a configuration, therefore, it is possible for the compression spring to push the swinging support unit 121L at the predetermined biasing point when the housing 2 is climbing the floor level difference, enhancing the floor level difference climbing ability of the self-propelled vacuum cleaner. It is also possible to easily set the pushing force of the biasing member 23a (compression spring).

The second embodiment also produces the same effect as the first embodiment, which in other words is the effect of preventing, in consideration of safety, the drive wheel 22L from popping out with strong force when the drive wheel 22L is caused to protrude outward to exceed the protrusion length H2 to a certain degree.

### (Third Embodiment)

Figures 6(A) to 6(C) are each an explanatory diagram of a wheel support structure according to a third embodiment, among which Figure 6(A) illustrates a state in which a drive wheel is running on a floor surface, Figure 6(B) illustrates a state in which the drive wheel is climbing a floor level difference, and Figure 6(C) illustrates a state in which the drive wheel is off the floor surface. It should be noted that elements in Figures 6(A) to 6(C) that are the same as the elements in Figures 6(A) to 6(C) are labelled using the same reference signs. The following mainly describes differences between the third embodiment and the first embodiment.

A wheel support structure 203L according to the third embodiment includes a biasing member 223a that is an tension spring. The biasing member 223a (tension spring) has one end 223a₁ slidably attached to a biasing member mounting rib 202f₂, which serves as the fixing section provided within the housing 2, and the other end 223a₂ attached to a swinging support unit 221b.

Specifically, the one end 223a₁ of the biasing member 223a has a ring shape with an elongate hole, and the other end 223a₁ of the biasing member 223a has a ring shape with a circular hole.

The biasing member mounting rib 202f₂ is stood in the vicinity of a rear end of the hole 2a₁₁ in the bottom plate 2a of the housing 2, and an upper end thereof has a recess 202f₂₁ to be engaged with the one end 223a₁ of the biasing member 223a.

Furthermore, one end (an end adjacent to the swinging axle 21a) of a swinging arm 221b of the swinging support unit 221L is provided with an L-shaped hook 221b₁, and the other end 223a₂ of the biasing member 223a is put on the hook 221b₁.

According to the wheel support structure 203L having such a configuration, the tension spring serving as the biasing member 223a pulls the hook 221b₁ of the swinging arm 221b rearward, and thus the swinging arm 221b is biased downward in a swinging direction (the direction indicated by arrow A) while the self-propelled vacuum cleaner is moving straight ahead on the floor surface G as illustrated in Figure 6(A).

The swinging arm 221b biased by the biasing member 223a greatly swings downward when the self-propelled vacuum cleaner is climbing the floor level difference S as illustrated in Figure 6(B).

Furthermore, once the self-propelled vacuum cleaner is lifted and the drive wheel 22L leaves the floor surface G as illustrated in Figure 6(C), the drive wheel 22L swings downward due to its own weight to reach the maximum protrusion length H3. The bias from the biasing member 223a toward the swinging arm 221b is released once the drive wheel 22L exceeds the protrusion length H2 to a certain degree. The biasing member 223a then fully compresses and is pushed rearward by the hook 221b₁, and thus the one end 223a₁ thereof slides rearward on the recess 202f₂₁ of the biasing member mounting rib 202f₂. This creates a gap between the ring shape of the one end 223a₁ and the recess 202f₂₁ to eliminate the biasing force of the biasing member 223a.

The third embodiment also produces the same effect as the first embodiment, which in other words is the effect of preventing, in consideration of safety, the drive wheel 22L from popping out with strong force when the drive wheel 22L is caused to protrude outward to exceed the protrusion length H2 to a certain degree.

### (Fourth Embodiment)

Figures 7(A) to 7(C) are each an explanatory diagram of a wheel support structure according to a fourth embodiment, among which Figure 7(A) illustrates a state in which a drive wheel is running on a floor surface, Figure 7(B) illustrates a state in which the drive wheel is climbing a floor level difference, and Figure 7(C) illustrates a state in which the drive wheel is off the floor surface. It should be noted that elements in Figures 7(A) to 7(C) that are the same as the elements in Figures 1 and 4(A) to 4(C) are labelled using the same reference signs. The following mainly describes differences between the fourth embodiment and the first and third embodiments.

A wheel support structure 303L according to the fourth embodiment has a biasing mechanism 323 including a guide 323b, a stopper 323c, a sliding member 323d, and a tension spring serving as a biasing member 323a. The guide 323b is provided on a guide mounting rib 302f₃, which serves as one of a pair of front and rear fixing sections provided within the housing 2, and projects in the front-back direction. The stopper 323c is provided on a distal end of the guide 323b. The sliding member 323d is attached to the guide 323b and enabled to slide in the front-back direction and abut the swinging support unit 21L. The biasing member 323a has two ends respectively attached to the sliding member 323d and the biasing member mounting rib 202f₂, which serves as the other of the pair of front and rear fixing sections.

The guide mounting rib 302f₃ is provided at the front end of the hole 2a₁₁ in the bottom plate 2a of the housing 2, and the biasing member mounting rib 202f₂ is provided at the front end of the hole 2a₁₁ as in the case of the third embodiment.

The guide 323b of the biasing mechanism 323 is a rod-shaped member having a non-circular (for example, square) transverse cross-section. The stopper 323c is a projection projecting outward from an outer periphery of the guide 323b. The sliding member 323d is a plate-shaped member having a hole (for example, a square hole) receiving insertion of the guide 323b.

According to the wheel support structure 303L having such a configuration, the tension spring serving as the biasing member 323a pulls the sliding member 323d rearward, and thus the swinging arm 21b is biased downward in the swinging direction (the direction indicated by arrow A) while the self-propelled vacuum cleaner is moving straight ahead on the floor surface G as illustrated in Figure 7(A). In this state, the sliding member 323d is located between the guide mounting rib 302f₃ and the projection 21b₁ of the swinging arm 21b.

The swinging arm 21b biased by the biasing member 323a greatly swings downward when the self-propelled vacuum cleaner is climbing the floor level difference S as illustrated in Figure 7(B). In this state, the sliding member 323d is not in abutment with the stopper 323c.

Furthermore, once the self-propelled vacuum cleaner is lifted and the drive wheel 22L leaves the floor surface G as illustrated in Figure 7(C), the drive wheel 22L swings downward due to its own weight to reach the maximum protrusion length H3. The bias from the biasing member 323a toward the swinging arm 21b is released once the drive wheel 22L exceeds the protrusion length H2 to a certain degree, but the biasing member 323a does not fully compress because of abutment with the stopper 323c. That is, the biasing member 323a in this state has remaining biasing force, because the biasing member 323a has not fully compressed and the biasing force thereof is not zero.

That is, the wheel support structure 303L according to the fourth embodiment can transmit strong pushing force to the swinging support unit 21L using the biasing member 323a (tension spring). Specifically, the biasing force gradually increases from zero as the tension spring gradually stretches from the fully compressed state, and therefore the tension spring is enabled to maintain strong pushing force while biasing the swinging support unit 21L by being designed to abut the stopper 323c once the tension spring has compressed to a predetermined length (a predetermined biasing point). According to such a configuration, therefore, it is possible for the tension spring to push the swinging support unit 21L at the predetermined biasing point when the housing 2 is climbing the floor level difference, enhancing the floor level difference climbing ability of the self-propelled vacuum cleaner. It is also possible to easily set the pushing force of the biasing member 23a (compression spring).

The fourth embodiment also produces the same effect as the first embodiment, which in other words is the effect of preventing, in consideration of safety, the drive wheel 22L from popping out with strong force when the drive wheel 22L is caused to protrude outward to exceed the protrusion length H2 to a certain degree.

### (Fifth Embodiment)

Figures 8(A) to 8(C) are each an explanatory diagram of a wheel support structure according to a fifth embodiment, among which Figure 8(A) illustrates a state in which a drive wheel is running on a floor surface, Figure 8(B) illustrates a state in which the drive wheel is climbing a floor level difference, and Figure 8(C) illustrates a state in which the drive wheel is off the floor surface. It should be noted that elements in Figures 8(A) to 8(C) that are the same as the elements in Figures 4(A) to 4(C) are labelled using the same reference signs. The following mainly describes differences between the fifth embodiment and the first embodiment.

A wheel support structure 403L according to the fifth embodiment includes a roller section 23c that is rotatable while in sliding contact with the swinging support unit 21L. The roller section 23c is provided on the distal end 23a₂ of the compression spring serving as the biasing member 23a.

The roller section 23c has a roller main body 23c₁ and a roller holding member 23c₂ rotatably holding the roller main body 23c₁ at a shaft 23c₃ thereof extending in the left-right direction, and the roller holding member 23c₂ is attached to the distal end 23a₂ of the compression spring.

In the case of the fifth embodiment, the swinging support unit 21L slides on the roller main body 23c₁ of the roller section 23c when the biasing member 23a pushes and causes the swinging support unit 21L to swing via the roller section 23c. The roller main body 23c₁ rotates as the swinging support unit 21L slides thereon to facilitate smooth swing of the swinging support unit 21L.

### (Sixth Embodiment)

Figures 9(A) to 9(C) are each an explanatory diagram of a wheel support structure according to a sixth embodiment, among which Figure 9(A) illustrates a state in which a drive wheel is running on a floor surface, Figure 9(B) illustrates a state in which the drive wheel is climbing a floor level difference, and Figure 9(C) illustrates a state in which the drive wheel is off the floor surface. It should be noted that elements in Figures 9(A) to 9(C) that are the same as the elements in Figures 5(A) to 5(C) and 8(A) to 8(C) are labelled using the same reference signs. The following mainly describes differences between the sixth embodiment and the second embodiment.

A wheel support structure 503L according to the sixth embodiment includes the roller section 23c that is rotatable while in sliding contact with the swinging support unit 121L. The roller section 23c is provided on the distal end 23a₂ of the compression spring serving as the biasing member 23a.

As in the case of the fifth embodiment, the roller section 23c has the roller main body 23c₁ and the roller holding member 23c₂.

In the case of the sixth embodiment, as in the case of the fifth embodiment, the swinging support unit 121L slides on the roller main body 23c₁ of the roller section 23c when the biasing member 23a pushes and causes the swinging support unit 121L to swing via the roller section 23c. The roller main body 23c₁ rotates as the swinging support unit 121L slides thereon to facilitate smooth swing of the swinging support unit 121L.

It should be noted that the roller main body 23c₁ abuts the stopper 123c before the biasing member 23a has fully stretched.

### (Seventh Embodiment)

Figures 10(A) to 10(C) are each an explanatory diagram of a wheel support structure according to a seventh embodiment, among which Figure 10(A) illustrates a state in which a drive wheel is running on a floor surface, Figure 10(B) illustrates a state in which the drive wheel is climbing a floor level difference, and Figure 10(C) illustrates a state in which the drive wheel is off the floor surface. It should be noted that elements in Figures 10(A) to 10(C) that are the same as the elements in Figures 7(A) to 7(C) are labelled using the same reference signs. The following mainly describes differences between the seventh embodiment and the fourth embodiment.

A wheel support structure 603L according to the seventh embodiment includes a roller that is rotatable while in sliding contact with the swinging support unit 21L and that serves as a roller section 623c. The roller is rotatably attached to a downward opening cutaway portion 623d₁ in a lower end of a sliding member 623d with a shaft extending in the left-right direction.

In the case of the seventh embodiment, the swinging support unit 21L slides on the roller section 623c when the tension spring serving as the biasing member 323a pushes and causes the swinging support unit 21L to swing via the sliding member 623d and the roller section 623c. The roller section 623c rotates as the swinging support unit 21L slides thereon to facilitate smooth swing of the swinging support unit 21L.

### (Eighth Embodiment)

Figures 11(A) to 11(C) are each an explanatory diagram of a wheel support structure according to an eighth embodiment, among which Figure 11(A) illustrates a state in which a drive wheel is running on a floor surface, Figure 11(B) illustrates a state in which the drive wheel is climbing a floor level difference, and Figure 11(C) illustrates a state in which the drive wheel is off the floor surface. It should be noted that elements in Figures 11(A) to 11(C) that are the same as the elements in Figures 8(A) to 8(C) are labelled using the same reference signs. The following mainly describes differences between the eighth embodiment and the fifth embodiment.

A wheel support structure 703L according to the eighth embodiment includes a swinging support unit 721L including a swinging arm 721b. The swinging arm 721b has a projection 721b₁ and, for abutment with the roller section 23c, an abutment surface 721b₁ including the projection 721b₁. The abutment surface 721b₁ is inclined toward the roller section 23c at a specific angle θ relative to a vertical line P orthogonal to the floor surface G when the self-propelled vacuum cleaner is placed on the floor surface G (Figure 11(A)).

According to this configuration, the biasing force of the biasing member 23a can be transmitted in the vertical direction to the abutment surface 721b₁ of the swinging arm 721b when the self-propelled vacuum cleaner is climbing the floor level difference (Figure 11(B)), readily transmitting great biasing force to the swinging arm 721b and advantageously helping the drive wheel 22L climb the floor level difference.

### (Other Embodiments)

1. The first embodiment may omit the rotational force transmitting mechanism, and the output shaft of the drive motor 21c may be directly coupled to the drive wheels 22L and 22R. In this case, a rotational speed-adjustable, reversible motor may be used. The same is true for the second to eighth embodiments.
2. The positions of the left and right wheel support structures in the first to eighth embodiments may be left-right reversed. In this case, the drive wheels are swingable about the swinging axle in an upward and rearward direction.
3. The roller sections in the fifth to eighth embodiments (Figures 8(A) to 11(C)) may each have a rubber roller including the roller main body and a rubber ring surrounding an outer circumferential surface of the roller main body.
   According to this configuration, the roller section is less slippery for the swinging support unit because of the rubber roller, and thus ensures reliable rotation when the swinging support unit swings.
4. A ball section may be adopted instead of any of the roller sections in the fifth to eighth embodiments (Figures 8(A) to 11(C)). The ball section includes a ball main body and a ball holding member having a fastening portion rotatably holding the ball main body, and the ball holding member is attached to the distal end of the compression spring serving as the biasing member.
   According to this configuration, the swinging support unit slides on the ball main body of the ball section when the biasing member pushes and causes the swinging support unit to swing via the ball section. The ball main body rotates as the swinging support unit slides thereon to facilitate smooth swing of the swinging support unit.
5. The configuration described for the eighth embodiment (Figures 11(A) to 11(C)) in which the abutment surface 721b1 of the swinging arm 721b of the swinging support unit 721L is inclined at the specific angle θ is also applicable to the first to seventh embodiments (Figures 4(A) to 10(C)).

### (Summarization)

The wheel support structure for a self-propelled electronic device according to the present invention comprises: a drive wheel supporting a housing to cause the housing to run on a floor surface; a swinging support unit rotatably supporting the drive wheel and pivoting the drive wheel to a bottom part of the housing in such a way that the drive wheel is swingable upward and dowanwardabout a swinging axle; and a biasing mechanism including a biasing member configured to give a dowanward bias to the swinging support unit to cause the drive wheel to swing downward, wherein
the biasing mechanism gives the downward bias to the swinging support unit using the biasing member while the housing is on the floor, and release the dowanward bias while the drive wheel is off the floor surface.

The wheel support structure for a self-propelled electronic device according to the present invention may have any of the following configurations, which may be combined as appropriate.
(1) The biasing member may be a compression spring having a proximal end fixed to a fixing section provided within the housing and a distal end enabled to abut the swinging support unit.
   According to this configuration, it is possible to cause the swinging support unit to swing downward by pushing and biasing the swinging support unit using the distal end of the compression spring while the housing is on the floor surface, making the wheel support structure simple.
(2) The biasing mechanism may further include a stopper configured to stop the distal end of the biasing member from pushing the swinging support unit once the drive wheel protrudes downward from the bottom part of the housing beyond a predetermined protrusion length.
   According to this configuration, it is possible to transmit strong force to the swinging support unit using the compression spring in the above-described configuration (1). That is, the biasing force gradually increases from zero as the compression spring gradually compresses from the fully stretched state, and therefore the compression spring is enabled to maintain strong pushing force while biasing the swinging support unit by being designed to abut the stopper once the compression spring has stretched to a predetermined length (a predetermined biasing point). According to this configuration, therefore, it is possible for the compression spring to push the swinging support unit at the predetermined biasing point when the housing is climbing a floor level difference, enhancing the floor level difference climbing ability of the self-propelled electronic device.
(3) The biasing member may be a tension spring having one end slidably attached to a fixing section provided within the housing and the other end attached to the swinging support unit.
   According to this configuration, the swinging support unit is pulled and biased by the tension spring to swing downward while the housing is on the floor surface, and the bias toward the swinging support unit is released as a result of the one end of the tension spring sliding on the fixing section while the drive wheel is off the floor surface.
(4) The biasing mechanism may further include a guide that is provided on one of a pair of front and rear fixing sections provided within the housing and that projects in a front-back direction, a stopper provided on a distal end of the guide, and a sliding member attached to the guide and enabled to slide in the front-back direction and abut the swinging support unit. The biasing member may be a tension spring having two ends respectively attached to the sliding member and the other of the pair of front and rear fixing sections.
   According to this configuration, the sliding member is pulled by the tension spring and the swinging support unit is pushed and biased by the sliding member to swing downward while the housing is on the floor surface, and the sliding member abuts the stopper to be stopped from pushing the swinging support unit to release the bias toward the swinging support unit once the drive wheel protrudes downward from the bottom part of the housing beyond a predetermined protrusion length.
   Furthermore, according to this configuration, it is possible to transmit strong pushing force to the swinging support unit using the tension spring. That is, the biasing force gradually increases from zero as the tension spring gradually stretches from the fully compressed state, and therefore the tension spring is enabled to maintain strong pushing force while biasing the swinging support unit by being designed to abut the stopper once the tension spring has compressed to a predetermined length (a predetermined biasing point). According to this configuration, therefore, it is possible for the tension spring to push the swinging support unit at the predetermined biasing point when the housing is climbing a floor level difference, enhancing the floor level difference climbing ability of the self-propelled electronic device.
(5) The distal end of the biasing member may be provided with a roller section or a ball section that is rotatable while in sliding contact with the swinging support unit.
   According to this configuration, the roller section or the ball section rotates while in sliding contact with the swinging support unit when the swinging support unit swings under biasing force of the biasing member (compression spring). It is therefore possible to facilitate smooth swing of the swinging support unit.
(6) The sliding member may be provided with a roller section or a ball section that is rotatable while in sliding contact with the swinging support unit.

According to this configuration, the roller section or the ball section rotates while in sliding contact with the swinging support unit when the swinging support unit swings under biasing force of the biasing member (tension spring). It is therefore possible to facilitate smooth swing of the swinging support unit.

It should be noted that the disclosed embodiments are merely examples in all aspects and should not be construed to be limiting. The scope of the present invention is indicated by the claims, rather than by the description given above, and includes all variations that are equivalent in meaning and scope to the claims.

### [Industrial Applicability]

The wheel support structure for a self-propelled electronic device according to the present invention is for example applicable to devices such as a self-propelled ion generator that runs while spreading ions and a self-propelled transport vehicle that transports things, as well as to the self-propelled electronic devices described in association with the embodiments above.

### [Reference Signs List]

1: self-propelled vacuum cleaner (self-propelled electronic device)
2: housing
2a: bottom plate (bottom part)
2f₂, 202f₂: biasing member mounting rib (fixing section)
3L, 103L, 203L, 303L: wheel support structure
21a: swinging axle
21L, 121L, 221L: swinging support unit
22L, 22R: drive wheel
23, 123, 223, 323: biasing mechanism
23a, 223a, 323a: biasing member
23b: abutment member
23b₁: proximal end
123c, 323c: stopper
223a₁: one end
223a₂: other end
302f₃: guide mounting rib (fixing section)
323b: guide
323d: sliding member
G: floor surface

## Claims

1. A wheel support structure for a self-propelled electronic device, the wheel support structure comprising:
a drive wheel supporting a housing to cause the housing to run on a floor surface;
a swinging support unit rotatably supporting the drive wheel and pivoting the drive wheel to a bottom part of the housing in such a way that the drive wheel is swingable upward and downward about a swinging axle; and
a biasing mechanism including a biasing member configured to give a downward bias to the swinging support unit to cause the drive wheel to swing downward, wherein
the biasing mechanism gives the downward bias to the swinging support unit using the biasing member while the housing is on the floor, and release the downward bias while the drive wheel is off the floor surface.

2. The wheel support structure according to claim 1, wherein the biasing member is a compression spring having a proximal end fixed to a fixing section provided within the housing and a distal end enabled to abut the swinging support unit.

3. The wheel support structure according to claim 2, wherein the biasing mechanism further includes a stopper configured to stop the distal end of the biasing member from pushing the swinging support unit once the drive wheel protrudes downward from the bottom part of the housing beyond a predetermined protrusion length.

4. The wheel support structure according to claim 1, wherein the biasing member is a tension spring having one end slidably attached to a fixing section provided within the housing and the other end attached to the swinging support unit.

5. The wheel support structure according to claim 1, wherein
the biasing mechanism further includes
a guide provided on one of a pair of front and rear fixing sections provided within the housing, the guide projecting in a front-back direction,
a stopper provided on a distal end of the guide, and
a sliding member attached to the guide and enabled to slide in the front-back direction and abut the swinging support unit, and
the biasing member is a tension spring having two ends respectively attached to the sliding member and the other of the pair of front and rear fixing sections.

6. The wheel support structure according to claim 2 or 3, wherein the distal end of the biasing member is provided with a roller section or a ball section that is rotatable while in sliding contact with the swinging support unit.

7. The wheel support structure according to claim 5, wherein the sliding member is provided with a roller section or a ball section that is rotatable while in sliding contact with the swinging support unit.
